# EUROPEAN PATENT SPECIFICATION

(11) **EP 2 014 784 B1**
(45) Date of publication and mention of the grant of the patent: **07.11.2018**
(21) Application number: 08251630.3
(22) Date of filing: 07.05.2008
(51) Int. Cl.: C23C 4/02, C23C 4/08, C23C 4/10, C22C 19/05, C23C 28/00, C23C 28/04, C23C 4/11

(54) **THERMAL BARRIER COATING SYSTEM FOR THERMAL MECHANICAL FATIGUE RESISTANCE**
Wärmedämmschichtsystem für thermischen Dauerfestigkeit
Revetement de barrier thermique ayant de la resistance à l endurance

(30) Priority: 11.07.2007 US 776082
(43) Date of publication of application: 14.01.2009
(73) Proprietor: United Technologies Corporation, Farmington, CT 06032 (US)
(72) Inventor: Strock, Christopher W., Kennebunk Maine 04043 (US); Tholen, Susan M., Kennebunk Maine 04043 (US)
(74) Representative: Dehns

(56) References cited:
- EP-A1- 0 935 010
- EP-A2- 1 275 743
- WO-A1-93/24672
- WO-A2-2006/076000
- US-A- 3 420 716
- US-B1- 6 284 323

## Description

### BACKGROUND OF THE INVENTION

This invention relates to protective thermal barrier coatings and, more particularly, to multi-layered thermal barrier coatings.

Components that are exposed to high temperatures, such as a component within a gas turbine engine, typically include a coating system having multiple layers of protective coatings. For example, components within a gas turbine engine such as turbine blades, turbine vanes, and blade outer air seals typically include the coating system to protect the component from erosion, oxidation, corrosion or the like to thereby enhance durability or maintain efficient operation of the engine. Typically, the coating system includes a MCrAlY bond coat, and a ceramic topcoat on the MCrAlY bond coat. The MCrAlY bond coat reacts with oxygen that diffuses through the ceramic topcoat to form an adherent oxide that protects the component from oxidation and corrosion.

Although effective, conventional coating systems often utilize expensive materials and are prone to forming reaction zones between the MCrAlY bond coat and the component. Elemental constituents from the MCrAlY bond coat diffuse and react with refractory metal constituents from the component to form precipitant phases that may reduce resistance to cracking, such as from thermal mechanical fatigue.

Accordingly, there is a need for an inexpensive coating system having an arrangement of layers that reduces or eliminates detrimental reaction zones. This invention addresses those needs while avoiding the shortcomings and drawbacks of the prior art.

A composite article having the features of the preamble of claim 1 is disclosed in WO 2006/076000 A2.

### SUMMARY OF THE INVENTION

According to the present invention there is provided a composite article as set forth in claim 1.

In an embodiment, the composite article and the bond coat of the composite article are formed from a nickel alloy having the same nominal composition. In embodiments, the bond coat comprises a thickness between 0.025 and 0.152 mm (1 mil and 6 mils), and the ceramic top coat is formed from yttria stabilized zirconia, zirconia, gadolinia, or hafnia.

According to the present invention there is also provided a method as set forth in claim 11.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows.
Figure 1 illustrates an example gas turbine engine.
Figure 2 illustrates a turbine section of the gas turbine engine.
Figure 3A illustrates a portion of an example seal member within the turbine section.
Figure 3B illustrates another example of a seal member.
Figure 3C illustrates another example of a seal member.
Figure 3D illustrates another example of a seal member.

### DETAILED DESCRIPTION OF THE PREFERRED EMBODIMENT

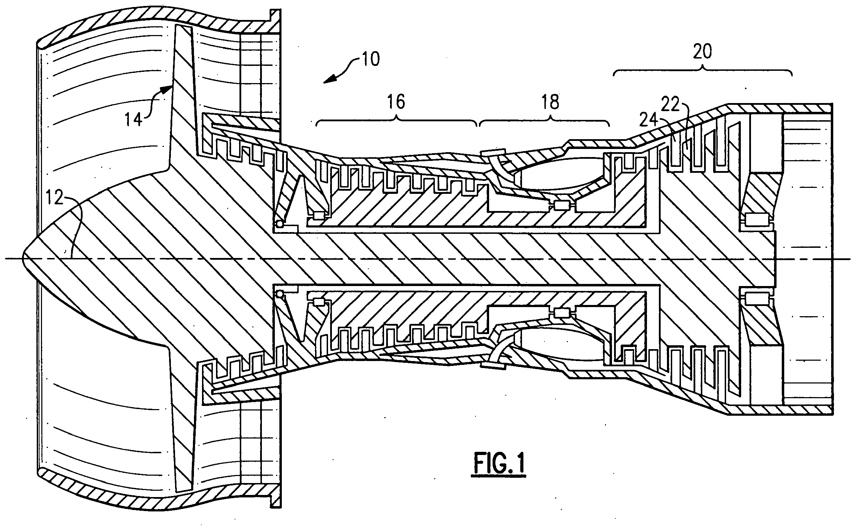

Figure 1 illustrates selected portions of an example gas turbine engine 10, such as a gas turbine engine 10 used for propulsion. In this example, the gas turbine engine 10 is circumferentially disposed about an engine centerline 12. The engine 10 includes a fan 14, a compressor section 16, a combustion section 18 and a turbine section 20 that includes turbine blades 22 and turbine vanes 24. As is known, air compressed in the compressor section 16 is mixed with fuel that is burned in the combustion section 18 to produce hot gases that are expanded in the turbine section 20. Figure 1 is a somewhat schematic presentation for illustrative purposes only and is not a limitation on the disclosed examples. Additionally, there are various types of gas turbine engines, many of which could benefit from the examples disclosed herein, which are not limited to the design shown.

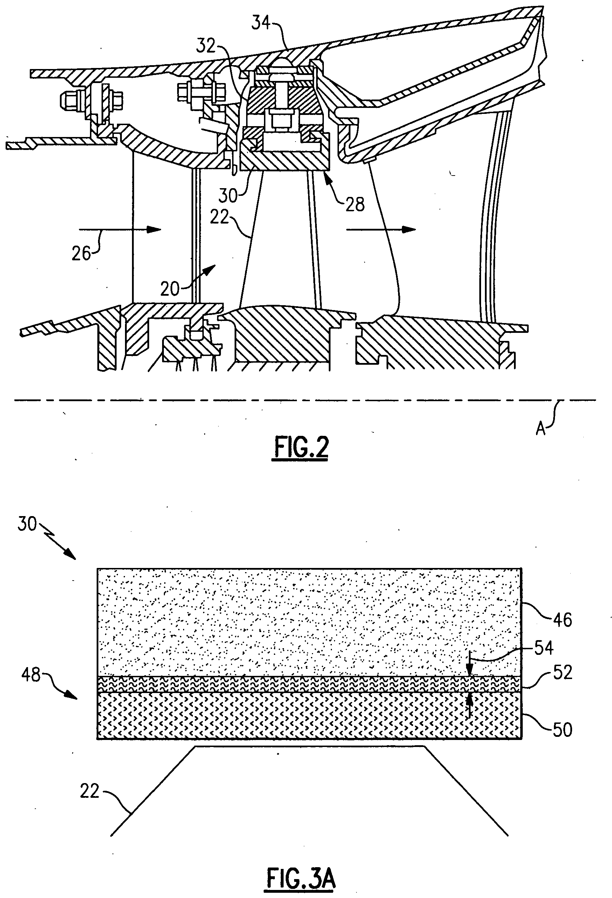

Figure 2 illustrates selected portions of the turbine section 20. The turbine blade 22 receives a hot gas flow 26 from the combustion section 18 (Figure 1). The turbine section 20 includes a blade outer air seal system 28 having a seal member 30 that functions as an outer wall for the hot gas flow 26 through the turbine section 20. The seal member 30 is secured to a support 32, which is in turn secured to a case 34 that generally surrounds the turbine section 20. For example, a plurality of the seal members 30 are circumferentially located about the turbine section 20.

Figure 3A illustrates an example portion of the seal member 30. In this example, the seal member 30 includes a substrate 46 having a coating system 48 disposed thereon. In this example, the coating system 48 includes a monolayer type of ceramic topcoat 50, such as an abradable ceramic coating, and a bond coat 52 between the ceramic top coat 50 and the substrate 46. Although a particular coating system 48 is shown, it should be understood that the disclosed examples are not limited to the illustrated configuration and may include additional layers. Furthermore, although the disclosed example illustrates the seal member 30, it is to be understood that the examples herein may be applied to other types of engine or non-engine components.

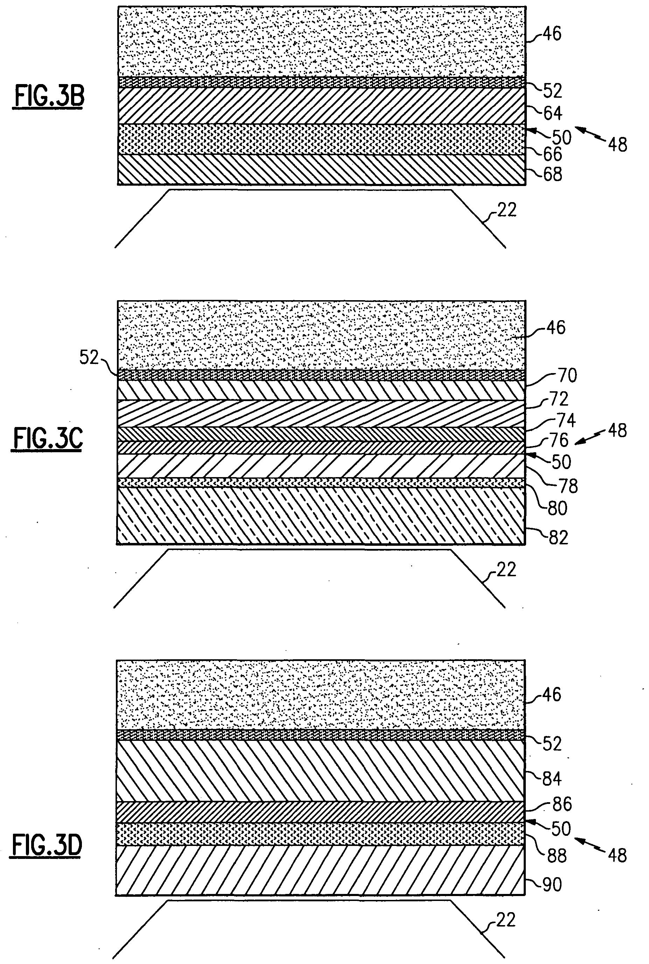

Figure 3B illustrates another example embodiment of the seal member 30. In this example, the coating system 48 includes a multi-layer type of the ceramic topcoat 50, and the bond coat 52 is between the ceramic top coat 50 and the substrate 46. The ceramic top coat 50 in this example includes a first layer 64, a second layer 66, and a third layer 68. The first layer 64 is graded and includes a composite of cobalt and alumina (Al₂O₃). In one example, the grading is 95/5 to 5/95 of cobalt/alumina, where the "xx/yy" nomenclature represents weight percentages of the given materials. Given this description, one of ordinary skill in the art will recognize that other compositions and gradings may be used to suit their particular needs.

Figure 3C illustrates another example embodiment of the seal member 30. In this example, the coating system 48 includes another multi-layer type of the ceramic topcoat 50, and the bond coat 52 is between the ceramic top coat 50 and the substrate 46. The ceramic top coat 50 in this example includes layers 70, 72, 74, 76, 78, 80, and 82. For example, layer 70 includes a 60/40 composite of cobalt/alumina. Layer 72 includes a grading of 60/40 to 20/80 of cobalt/alumina. Layer 74 includes a 20/80 composite of cobalt/alumina. Layer 76 includes a grading of 100/0 to 0/100 of alumina/yttria stabilized zirconia (e.g. 20wt% yttria stabilized zirconia). Layer 78 is 20wt% yttria stabilized zirconia. Layer 80 includes a grading of 100/0 to 0/100 of 20wt% yttria stabilized zirconia/7wt% porous yttria stabilized zirconia. Layer 82 includes 7wt% porous yttria stabilized zirconia. Given this description, one of ordinary skill in the art will recognize that other compositions and gradings may be used to suit their particular needs.

Figure 3D illustrates another example embodiment of the seal member 30. In this example, the coating system 48 includes another multi-layer type of the ceramic topcoat 50, and the bond coat 52 is between the ceramic top coat 50 and the substrate 46. The ceramic top coat 50 in this example includes layers 84, 86, 88, and 90. For example, layer 84 includes a grading of 80/20 to 10/90 of cobalt/alumina. Layer 86 includes a grading of 90/10 to 10/90 of alumina/20wt% yttria stabilized zirconia. Layer 88 includes a grading of 90/10 to 10/90 of 20wt% yttria stabilized zirconia/7wt% porous yttria stabilized zirconia. Layer 90 includes 7wt% porous yttria stabilized zirconia. Given this description, one of ordinary skill in the art will recognize that other compositions and gradings may be used to suit their particular needs.

In the disclosed examples, the bond coat 52 and the substrate 46 are made of materials having the same nominal composition. For example, the substrate 46 is formed from a first nickel alloy material having a first nominal composition, and the bond coat 52 is formed from a second nickel alloy having the nominal composition of the first nickel alloy. In a further example, the substrate 46 and the bond coat 52 each comprise Inconel™ 718 or another type of nickel alloy.

The nominal composition of Inconel™ 718 includes about 50 wt% to 55 wt% of nickel, about 17 wt% to 21 wt% of chromium, about 4.75 wt% to 5.5 wt% of a mix of columbium and tantalum, about 2.8 wt% to 3.3 wt% of molybdenum, about 0.65 wt% to 1.15 wt% of titanium, about 0.2 wt% to 0.8 wt% of aluminum, and a balance of iron. Optionally, the nominal composition of Inconel™ 718 may also include up to about 1 wt% of cobalt, up to about 0.08 wt% of carbon, up to about 0.35 wt% of manganese, up to about 0.35 wt% of silicon, up to about 0.015 wt% of phosphorous, up to about 0.015 wt% of sulphur, up to about 0.006 wt% of boron, up to about 0.3 wt% of copper, or combinations thereof. Additionally, Inconel™ 718 may include impurities that do not affect the properties of the alloy or elements that are unmeasured or undetectable in the alloy.

In another example, the substrate 46 may comprise a nickel alloy that includes about 5.9 wt% of tungsten, about 5 wt% of chromium, about 10 wt% of cobalt, about 5.65 wt% of aluminum, about 8.7 wt% of tantalum, about 1.9 wt% of molybdenum, about 3.0 wt% of rhenium, about 0.10 wt% hafnium, and a balance of nickel. Additionally, the alloy may include impurities that do not affect the properties of the alloy or elements that are unmeasured or undetectable in the alloy.

Using a nominal composition of the bond coat 52 that is the same as the nominal composition of the substrate 46 establishes a desired level of thermal mechanical strength (e.g., thermal mechanical fatigue) of the substrate 46. For example, in prior thermal barrier systems that utilize a bond coat having a different composition from a substrate, elemental constituents within the bond coat interdiffuse with the substrate. Over time, the elemental constituents react with the substrate to reduce the thermal mechanical strength of the substrate (i.e., increasing a rate of reduction in the thermal mechanical strength of the substrate. However, in the disclosed example, because the nominal composition of the bond coat 52 is the same as the nominal composition of the substrate 46, interdiffusion does not occur or is insignificant because the elements are present in the same amounts. Thus, by using the same nominal composition, the detrimental reactions with the substrate 46 are limited or eliminated to thereby maintain the thermal mechanical strength of the substrate 46 (e.g., limiting the rate of reduction in the thermal mechanical strength).

In the disclosed example, the bond coat 52 provides a dual function of establishing a desired level of thermal mechanical strength of the substrate 46 and providing a rough surface for bonding of the ceramic top coat 50. For example, the bond coat 52 is formed on the substrate 46 using a thermal spray process, a vapor deposition process, or the like that results in a surface roughness of the bond coat 52 that is greater than the roughness of the surface of the substrate 46. The ceramic top coat 50 is then formed on the bond coat 52 and mechanically interlocks with the roughness provided by the bond coat 52.

In the disclosed examples, the bond coat 52 is not relied on to provide an oxidative layer, as are conventional bond coats that provide an oxidative protective layer. Conventional bond coats require a minimum thickness to provide the oxidative layer. However, since the disclosed bond coat 52 does not provide an oxidative layer, a more compact thickness may be used. For example, the bond coat 52 comprises a thickness 54 between about 1 mil (0.025 mm) and 12 mils (0.305 mm).

The ceramic top coat 50 includes a ceramic material, such as a ceramic material suitable for functioning as a thermal barrier within the turbine section 20 of the gas turbine engine 10. For example, the ceramic top coat 50 includes yttria stabilized zirconia (e.g., 7 wt% yttria stabilized zirconia), zirconia, gadolinia, hafnia, or combinations thereof. In one example, the zirconia, gadolinia, or hafnia comprises a composition disclosed in U.S. Patent No. 6,284,323 or U.S. Patent No. 6,924,040. Given this description, one of ordinary skill in the art will recognize additional ceramic materials to meet their particular needs.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

## Claims

1. A composite article (30) comprising:
a substrate (46) formed from a first metallic material having a nominal composition which comprises nickel;
a bond coat (52) disposed on the substrate (46); and
a ceramic top coat (50) disposed on the bond coat; **characterised in that**:
the bond coat (52) is formed from a second metallic material having the nominal composition of the first metallic material.

2. The composite article as recited in Claim 1, wherein the nominal composition consists of 50 wt % to 55 wt % of nickel, 17 wt% to 21 wt% of chromium, 4.75 wt% to 5.5 wt% of a combination of columbium and tantalum, 2.8 wt % to 3.3 wt% of molybdenum, 0.65 wt% to 1.15 wt% of titanium, 0.28 wt% to 0.8 wt% of aluminum, and a balance of iron.

3. The composite article as recited in Claim 1, wherein the nominal composition consists of 50 wt % to 55 wt % of nickel, 17 wt% to 21 wt% of chromium, 4.75 wt% to 5.5 wt% of a combination of columbium and tantalum, 2.8 wt % to 3.3 wt% of molybdenum, 0.65 wt% to 1.15 wt% of titanium, 0.28 wt% to 0.8 wt% of aluminum, and at least one of up to 1 wt% of cobalt, up to 0.08 wt% of carbon, up to 0.35 wt% of manganese, up to 0.35 wt% of silicon, up to 0.015 wt % of phosphorous, up to 0.015 wt% of sulphur, up to 0.006 wt% of boron, up to 0.3 wt% of copper, and combinations thereof, and a balance of iron.

4. The composite article as recited in Claim 1, wherein the nominal composition consists of 5.9 wt% of tungsten, 5 wt% of chromium, 10 wt% of cobalt, 5.65 wt% of aluminum, 8.7 wt% of tantalum, 1.9 wt% of molybdenum, 3.0 wt% of rhenium, 0.10 wt% hafnium, and a balance of nickel.

5. The composite article as recited in any preceding Claim, wherein the bond coat (52) comprises a thickness of 0.025 to 0.305 mm (about 1mil to 12 mils).

6. The composite article as recited in any preceding Claim, wherein the ceramic top coat (50) comprises at least one of: yttria stabilized zirconia, zirconia, gadolinia, hafnia.

7. The composite article as recited in any preceding Claim, wherein the ceramic top coat (50) comprises multiple layers.

8. The composite article as recited in any preceding Claim, wherein the ceramic top coat (50) comprises at least one graded layer.

9. The composite article as recited in any preceding Claim, wherein the substrate (46) comprises a first surface roughness and the bond coat (52) comprises a second surface roughness that is greater than the first surface roughness.

10. The composite article as recited in any preceding Claim, wherein the substrate (46), the bond coat (52), and the ceramic top coat (50) together comprise an engine component.

11. A method of producing a composite article (30) as recited in claim 1, comprising:
providing a substrate (46) formed from a first metallic material having a nominal composition which comprises nickel, and forming on the substrate a bond coat (52) formed from a second metallic material having the nominal composition of the first metallic material.

12. The method as recited in Claim 11, further including at least one of thermal spraying or vapor depositing the bond coat (52) onto the substrate (46).

13. The method as recited in Claim 11 or 12, further comprising establishing a desired surface roughness of the bond coat (52) that is greater than a surface roughness of the substrate (46).

## Patentansprüche

1. Verbundartikel (30), umfassend:
ein Substrat (46), das aus einem ersten metallischen Material gebildet ist, das eine nominale Zusammensetzung aufweist, die Nickel umfasst;
eine Haftschicht (52), die an dem Substrat (46) vorgesehen ist; und
eine keramische Deckschicht (50), die an der Haftschicht vorgesehen ist; **dadurch gekennzeichnet, dass**:
die Haftschicht (52) aus einem zweiten metallischen Material gebildet ist, das die nominale Zusammensetzung des ersten metallischen Materials aufweist.

2. Verbundartikel nach Anspruch 1, wobei die nominale Zusammensetzung aus 50 Gew.-% bis 55 Gew.-% Nickel, 17 Gew.-% bis 21 Gew.-% Chrom, 4,75 Gew.-% bis 5,5 Gew.-% einer Kombination aus Columbium und Tantal, 2,8 Gew.-% bis 3,3 Gew.-% Molybdän, 0,65 Gew.-% bis 1,15 Gew.-% Titan, 0,28 Gew.-% bis 0,8 Gew.-% Aluminium und einem Rest Eisen besteht.

3. Verbundartikel nach Anspruch 1, wobei die nominale Zusammensetzung aus 50 Gew.-% bis 55 Gew.-% Nickel, 17 Gew.-% bis 21 Gew.-% Chrom, 4,75 Gew.-% bis 5,5 Gew.-% einer Kombination aus Columbium und Tantal, 2,8 Gew.-% bis 3,3 Gew.-% Molybdän, 0,65 Gew.-% bis 1,15 Gew.-% Titan, 0,28 Gew.-% bis 0,8 Gew.-% Aluminium und zumindest einem von bis zu 1 Gew.-% Kobalt, bis zu 0,08 Gew.-% Kohlenstoff, bis zu 0,35 Gew.-% Mangan, bis zu 0,35 Gew.-% Silizium, bis zu 0,015 Gew.-% Phosphor, bis zu 0,015 Gew.-% Schwefel, bis zu 0,006 Gew.-% Bor, bis zu 0,3 Gew.-% Kupfer und Kombinationen davon und einem Rest Eisen besteht.

4. Verbundartikel nach Anspruch 1, wobei die nominale Zusammensetzung aus 5,9 Gew.-% Wolfram, 5 Gew.-% Chrom, 10 Gew.-% Kobalt, 5,65 Gew.-% Aluminium, 8,7 Gew.-% Tantal, 1,9 Gew.-% Molybdän, 3,0 Gew.-% Rhenium, 0,10 Gew.-% Hafnium und einem Rest Nickel besteht.

5. Verbundartikel nach einem vorhergehenden Anspruch, wobei die Haftschicht (52) eine Dicke von 0,025 mm bis 0,305 mm (1 mil bis 12 mil) umfasst.

6. Verbundartikel nach einem vorhergehenden Anspruch, wobei die keramische Deckschicht (50) zumindest eines von Folgendem umfasst: mit Yttriumoxid stabilisiertes Zirkoniumdioxid, Zirkoniumdioxid, Gadoliniumoxid, Hafniumoxid.

7. Verbundartikel nach einem vorhergehenden Anspruch, wobei die keramische Deckschicht (50) mehrere Schichten umfasst.

8. Verbundartikel nach einem vorhergehenden Anspruch, wobei die keramische Deckschicht (50) zumindest eine abgestufte Schicht umfasst.

9. Verbundartikel nach einem vorhergehenden Anspruch, wobei das Substrat (46) eine erste Oberflächenrauhigkeit umfasst und die Haftschicht (52) eine zweite Oberflächenrauhigkeit umfasst, die höher als die erste Oberflächenrauhigkeit ist.

10. Verbundartikel nach einem vorhergehenden Anspruch, wobei das Substrat (46), die Haftschicht (52) und die keramische Deckschicht (50) zusammen eine Motorkomponente umfassen.

11. Verfahren zur Herstellung eines Verbundartikels (30) nach Anspruch 1, umfassend:
Bereitstellen eines Substrats (46), das aus einem ersten metallischen Material gebildet ist, das eine nominale Zusammensetzung aufweist, die Nickel umfasst, und Bilden einer Haftschicht (52), die aus einem zweiten metallischen Material gebildet ist, das die nominale Zusammensetzung des ersten metallischen Materials aufweist, an dem Substrat.

12. Verfahren nach Anspruch 11, ferner beinhaltend zumindest eines von thermischem Spritzen oder Dampfabscheiden der Haftschicht (52) auf das Substrat (46).

13. Verfahren nach Anspruch 11 oder 12, ferner umfassend das Erzeugen einer gewünschten Oberflächenrauhigkeit der Haftschicht (52), die höher als eine Oberflächenrauhigkeit des Substrats (46) ist.

## Revendications

1. Article composite (30) comprenant :
un substrat (46) formé d'un premier matériau métallique ayant une composition nominale qui comprend du nickel ;
une couche de cohésion (52) disposée sur le substrat (46) ; et
une couche supérieure en céramique (50) disposée sur la couche de cohésion ; **caractérisé en ce que** :
la couche de cohésion (52) est formée à partir d'un second matériau métallique ayant la composition nominale du premier matériau métallique.

2. Article composite selon la revendication 1, dans lequel la composition nominale est constituée de 50 % en poids à 55 % en poids de nickel, de 17 % en poids à 21 % en poids de chrome, de 4,75 % en poids à 5,5 % en poids d'une combinaison de niobium et de tantale, de 2,8 % en poids à 3,3 % en poids de molybdène, de 0,65 % en poids à 1,15 % en poids de titane, de 0,28 % en poids à 0,8 % en poids d'aluminium, et le reste de fer.

3. Article composite selon la revendication 1, dans lequel la composition nominale est constituée de 50 % en poids à 55 % en poids de nickel, de 17 % en poids à 21 % en poids de chrome, de 4,75 % en poids à 5,5 % en poids d'une combinaison de niobium et de tantale, de 2,8 % en poids à 3,3 % en poids de molybdène, de 0,65 % en poids à 1,15 % en poids de titane, de 0,28 % en poids à 0,8 % en poids d'aluminium, et au moins l'un de jusqu'à 1 % en poids de cobalt, jusqu'à 0,08 % en poids de carbone, jusqu'à 0,35 % en poids de manganèse, jusqu'à 0,35 % en poids de silicium, jusqu'à 0,015 % en poids de phosphore, jusqu'à 0,015 % en poids de soufre, jusqu'à 0,006 % en poids de bore, jusqu'à 0,3 % en poids de cuivre, et des combinaisons de ceux-ci, et le reste de fer.

4. Article composite selon la revendication 1, dans lequel la composition nominale est constituée de 5,9 % en poids de tungstène, de 5 % en poids de chrome, de 10 % en poids de cobalt, de 5,65 % en poids d'aluminium, de 8,7 % en poids de tantale, de 1,9 % en poids de molybdène, de 3,0 % en poids de rhénium, de 0,10 % en poids d'hafnium, et le reste de nickel.

5. Article composite selon une quelconque revendication précédente, dans lequel la couche de cohésion (52) comprend une épaisseur de 0,025 mm à 0,305 mm (1 mil à 12 mil).

6. Article composite selon une quelconque revendication précédente, dans lequel la couche supérieure en céramique (50) comprend au moins l'un de : la zircone stabilisée à l'yttrium, la zircone, l'oxyde de gadolinium, l'oxyde d'hafnium.

7. Article composite selon une quelconque revendication précédente, dans lequel la couche supérieure en céramique (50) comprend plusieurs couches.

8. Article composite selon une quelconque revendication précédente, dans lequel la couche supérieure en céramique (50) comprend au moins une couche à gradient.

9. Article composite selon une quelconque revendication précédente, dans lequel le substrat (46) comprend une première rugosité de surface et la couche de cohésion (52) comprend une seconde rugosité de surface qui est supérieure à la première rugosité de surface.

10. Article composite selon une quelconque revendication précédente, dans lequel le substrat (46), la couche de cohésion (52), et la couche supérieure en céramique (50) constituent ensemble un composant de moteur.

11. Procédé de production d'un article composite (30) selon la revendication 1, comprenant :
la fourniture d'un substrat (46) formé à partir d'un premier matériau métallique ayant une composition nominale qui comprend du nickel, et la formation sur le substrat d'une couche de cohésion (52) formée à partir d'un second matériau métallique ayant la composition nominale du premier matériau métallique.

12. Procédé selon la revendication 11, comprenant en outre au moins l'un d'une projection thermique ou d'un dépôt par évaporation de la couche de cohésion (52) sur le substrat (46).

13. Procédé selon la revendication 11 ou 12, comprenant en outre l'établissement d'une rugosité de surface souhaitée de la couche de cohésion (52) qui est supérieure à une rugosité de surface du substrat (46).
